(19) Europäisches Patentamt
European Patent Office
Office européen des brevets

(11) **EP 1 739 966 A1**

(12) **EUROPEAN PATENT APPLICATION**

(43) Date of publication:
**03.01.2007 Bulletin 2007/01**

(51) Int Cl.:
*H04N 7/15* (2006.01)    *H04N 7/18* (2006.01)

(21) Application number: **05405419.2**

(22) Date of filing: **30.06.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Pixartis SA**
**1005 Lausanne (CH)**

(72) Inventors:
• **Kunt, Murat**
**1603 Grandvaux (CH)**

• **Thiran, Jean-Philippe**
**1806 St.-Légier (CH)**
• **Butz, Torsten**
**9052 Niederteufen (CH)**

(74) Representative: **Ganguillet, Cyril**
**ABREMA**
**Agence Brevets & Marques**
**Ganguillet & Humphrey**
**Avenue du Théâtre 16**
**Case postale 5027**
**1002 Lausanne (CH)**

(54) **System for videoconferencing**

(57)    The system for videoconferencing with automatic speaker detection and tracking comprises first means (21) to pan and zoom on a speaker automatically, to attend a "head and shoulder" mode, provided that second means (20) detect that a potential speaker rises his/her hand to initiate the tracking. The tracking operates on a "first-come, first-served" basis, requiring other speakers to wait for their turn. The schedule for the speakers can also be changed interactively by the person who chairs the meeting. The system can be implemented by pure software and runs real-time. It is only limited by the panning speed of the step motors moving the camera.

Fig. 2

## Description

The invention relates to a system for videoconferencing in accordance with the preamble of claim 1.

Digital technologies are transforming the audiovisual world since at least three decades. In the early days, when an image or a video was digitized with regular or good quality, the volume of resulting digital data was just enormous. Several millions of bytes were necessary to represent a single image and several billions of bytes were needed for 1 hour digital video. This made, then, digital visual communication quite impossible. The introduction of compression techniques and faster Integrated Circuits (IC) made digital image and video transmission possible. As long as the main application remained broadcasting, higher complexity of the encoder with respect to the decoder was not a problem, causing only a slight delay in transmission. Further methodological and technological improvements solved this problem. Videoconferencing between distant meeting rooms became operational since more than a decade. Medium to large size companies, universities and other institutions are using it increasingly often to save time and cut down the travel cost. First equipments specially built were bulky and expensive and required large bandwidth, special communication lines such as several 64 kBit/sec ISDN lines. Picture and audio quality were moderate to low despite the greed on bandwidth. Nowadays, videoconferencing systems are available at much reduced cost and volume and sometimes in the form of a stand-alone closed system, a PC board and its associated software or only in software, requiring only a camera and a display.

One can state that videoconferencing between only two people works rather well, as they can see each other in the "head and shoulder" mode, full screen. However, there is still a problem, which limits the use of videoconferencing systems on a larger scale and more often. If at each end of the conference, there is more than one person, the videoconference systems never give full satisfaction to their users. The main reason is that, participants to a videoconference cannot also play the role of a cameraman to pan and zoom on the speaker to show his/her facial expressions in detail to the remote meeting room. Even though the commands for the cameras of high-end systems are available, participants are not necessarily familiar with them or do not want to waste too much time in adjusting this for every successive speaker. Any attempt to pan and zoom is either on the wrong direction or comes too late. As a consequence, most of the time each meeting room displays for the other distant room a full image in which all the participants are present. Due to the limited resolution at that scale, it is hard to recognize people and almost impossible to see their facial expressions.

It is therefore the object of the invention to create a system or a method and a device for videoconferencing which avoids these shortcomings.

This object is advantageously achieved in accordance with the invention by a system in accordance with claim 1.

Further advantageous embodiments of the invention ensue from the additional dependent claims.

The novel reception principle discloses a system, that allows to pan and zoom on the speaker automatically, to attend the "head and shoulder" mode, provided that a potential speaker rises his/her hand to initiate the tracking. The tracking operates on a " first-come, first-served" basis, requiring other speakers to wait for their turn. The schedule for the speakers can also be changed interactively by the person who chairs the meeting.

The system can be implemented by pure software and runs real-time. It is only limited by the panning speed of the step motors moving the camera.

The invention will be explained in greater detail in what follows by means of drawings. Shown are in:

**Fig. 1** a schematic representation of a prior art system,

**Fig. 2** a schematic representation of a system according to the invention, and

**Fig. 3** a schematic representation of the geometry of a "head and shoulder" mode.

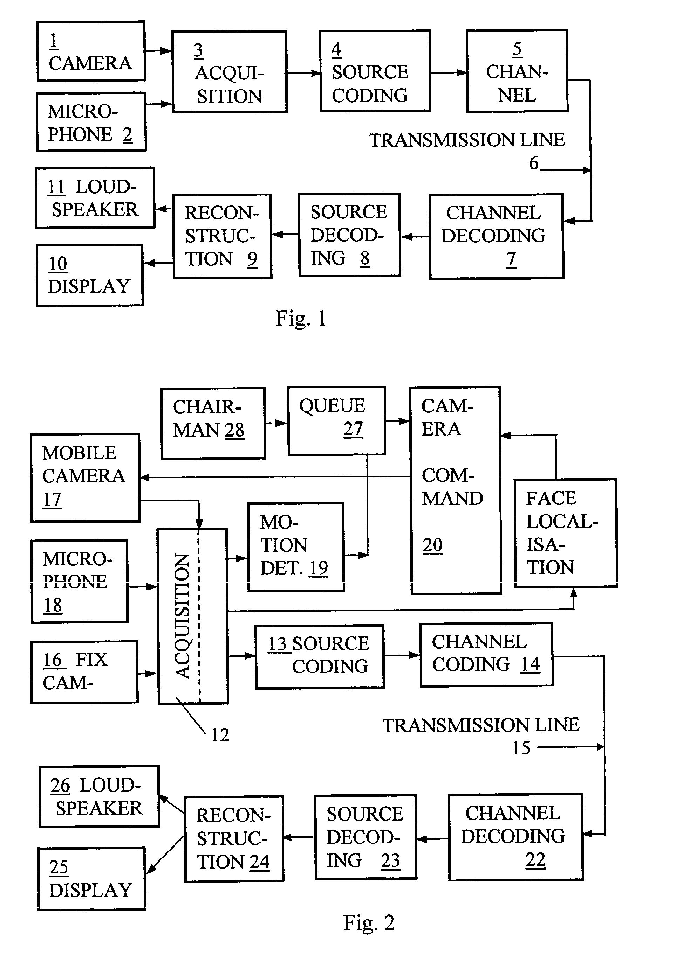

Fig. 1 is half of the general block diagram of a known videoconferencing system (simplex) comprising a camera 1 and a microphone 2 connected to a acquisition block 3, a source coding block 4 and a channel coding block 5 connected to a first terminal of a transmission line 6 which has a second terminal connected via a channel decoding block 7, a source decoding block 8 and a reconstruction block 9 to a display 10 and a loud speaker 11.

The disclosed invention may be implemented in many ways sharing common characteristics, for example as an automatic speaker detection and tracking system. Fig. 2 shows the functional building blocks of the invention, which is an add-on system that is inserted at a point between an acquisition block 12 and a source coding block 13 connected via a channel coding block 14 to a first terminal of a transmission line (fig. 2). It can be inserted on one site only and/or at the same point in the symmetrical system in the remote room as well. The video acquisition system according to the invention comprises two cameras 16, 17 and one microphone 18 (fig. 2) as input devices. One camera 16 is fixed and shows continuously all the participants to the conference in one room. A typical such camera could be Axis 210 from Axis Communications. Depending on the model, it may contain the microphone.

The second camera 17 needs to be mobile, preferably with three degrees of freedom: latitude, longitude and zoom, preferably a pan-tilt-zoom (PTZ) motorized camera. A typical such camera could be Axis 213 PTZ. Accordingly, the input of the disclosed invention is made of three signals: one audio signal from the microphone and two video signals from the cameras (fix and mobile).

Then, a motion detection and analysis is performed in a block 19 to detect the first rising hand. Direction information is given to the mobile camera17 via a mobile camera command 20. The output of the mobile camera is analysed in a block 21 to detect and locate the face and/or the head and shoulder of the speaker. This block 21 is connected to an output of the acquisition block 12. Finally the mobile camera 17 is zoomed towards the speaker until the "head and shoulder" position is reached. The mobile camera keeps this position as long as the person in the image is recognized as speaking. This can be done for instance by detection of the lips motion along with sufficient audio energy. Meanwhile, the fixed camera is scheduling speakers which raise their hand for once the current speaker has finished talking. If the currently framed person is recognized as not speaking anymore, for instance if there is no more lips motion and the audio energy is weak, the system returns the command to the fixed camera. The systems then frame the next scheduled person having requested to speak, or display the global view of the scene if nobody has requested to speak on this site.

A second terminal of the transmission line 15 is connected via a channel decoding system 22, a source decoding block 23 and a reconstruction block 24 to a display 25 with a corresponding loud speaker 26. The other half, not shown, is identical exception made to the direction of the information flow. The complete system is full duplex.

A simple motion detection algorithm, such as block-matching [cf. ref. 1] is applied to the digital video signal of the fixed camera. For noisy signals it can be preceded by pre-filtering, for example a 3 x 3 smoothing, if necessary.

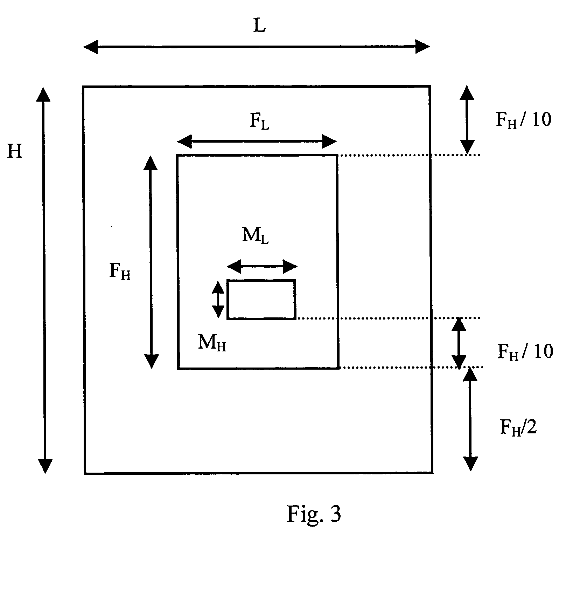

Once a strong vertical motion is detected, e.g. a hand rising, next to a face, a change detection [cf. references 2, 3, 4, 5, 6] with respect to a reference frame confirms the detected motion. For poorly illuminated rooms, a skin colour detection [cf. references 7, 8, 9] may also be activated to re-enforce the hand rising detection. The angular latitude position thus detected is used to move the mobile camera to center that position. Then, a face detection algorithm, such as described for example in the references [10, 11] is applied to the video signal provided by the mobile camera. It detects the nearest face to the raised hand. The position of the face is indicated by a rectangle $F_H \times F_L$ that circumscribes the head. The mobile camera is horizontally centered on this rectangle and zoomed until the "head and shoulder" position is reached. This position is geometrically defined in fig. 3, where L is the video image width and H the video image height. Speed and effectiveness of the hand rising detection can be improved by first detecting and tracking all the faces in the global image and then searching for vertical motion in the neighborhood of each face.

The next step is to detect when the speaker stops speaking. This is done using both the video and the audio signals. First the mouth has to be detected. For instance if we know that the face is circumscribed in the rectangle $F_H \times F_L$, the position of the mouth can be approximately located by a smaller rectangle $M_H \times M_L$ using a general face model. The motion of the video signal seen through this $M_H \times M_L$ rectangle window is then monitored, for instance as frame difference energy $\varepsilon_M$ using:

$$\varepsilon_M = \sum_{k=K_1}^{K_2} \sum_{l=L_1}^{L_2} [x(k+dk, l+dl) - x(k,l)]^2 \qquad (1.1)$$

where $(K_2-K_1) \times (L_2-L_1)$ is the size of the $M_H \times M_L$ mouth region, $dk$ and $dl$ are the inter-frame displacements and $x(k, l)$ the image function. Thus, $x(k+dk, l+dl)$ is the displaced version of $x(k,l)$ within one frame difference. The magnitude of a digital signal can be viewed as a voltage. Extending this, its square, integrated (summation) can be viewed as energy.

In parallel, the energy $\varepsilon_A$ of the audio signal is computed in a sliding window of length $T_1$ (second) using:

$$\varepsilon_A = \sum_{m=M_1}^{M_2} y^2(m) \qquad (1.2)$$

where $M_2-M_1$ is a sliding window of length $T_1$ and $y(m)$ is the audio signal.

The video is switched to the fixed camera or to the next speaker when both energies remain more than $T_2$ seconds below fixed thresholds to serve the next speaker. If in the mean time or during the previous speaker's talk a new speaker has been detected by the fixed camera, the mobile camera is moved towards the new speaker.

While the mobile camera's video signal is processed to zoom on the detected speaker, the video signal of the fixed camera is continuously monitored to detect other rising hands. Detected speaker locations are queued for the speaker schedule 27. This schedule can be modified by the meeting chairman 28.

The above mentioned exemplary embodiments are merely understood to be a representation of the employment of such a system. Other embodiments resulting therefrom for one skilled in the art, however, also contain the basic concept of the invention.

References :

[1] Fulvio Moschetti, Murat Kunt and Eric Debes, "A Statistical Adaptive Block-Matching Motion Estimation", IEEE Trans. on Circuits and Systems for Video Technology, vol. 13, No. 4, April 2003, pp. 417-431

[2] R. Lillestrand, "Techniques for change detection," IEEE Trans. Comput., vol. 21, no. 7, pp. 654-659, Jul. 1972.

[3] M. S. Ulstad, "An algorithm for estimating small scale differences between two digital images," Pattern Recognit., vol. 5, pp. 323-333, 1973.

[4] K. Skifstad and R. Jain, "Illumination independent change detection for real world image sequences," Comput. Vis. Graph. Image Process., vol. 46, no. 3, pp. 387-399, 1989.

[5] L. G. Brown, "A survey of image registration techniques," ACM Comput. Surv., vol. 24, no. 4, 1992.

[6] R. J. Radke, S. Andra, O. Al-Kofahi, B. Roysam, "Image change detection algorithms: A systematic survey." IEEE Transactions on Image Processing, vol. 14, No. 3, March 2005, pp. 294-307

[7] R.L. Hsu, M. Abdel-Mottaleb and A.K. Jain, "Face detection in Color Images", IEEE Trans. on Pattern Analysis and Machine Intelligence, vol. 24, No. 5, May 2002, pp. 696-706.

[8] E. Saber and A. M. Tekalp, "Frontal-View Face Detection and Facial Feature Extraction Using Color, Shape and Symmetry Based Cost Functions," Pattern Recognition Letters, vol. 19, pp. 669-680, 1998

[9] M.-H. Yang and N. Ahuja, "Detecting Human Faces in Color Images," Proc. IEEE Int'l Conf. Imaging Processing, pp. 127-139, Oct. 1998

[10] F. Crow, "Summed-area tables for texture mapping," in Proceedings of SIGGRAPH, volume 18(3), pages 207-212, 1984.

[11] P. Viola and M. Jones, "Rapid object detection using a boosted cascade of simple features", Proc. of IEEE Conf. on Computer Vision and Pattern Recognition, 2001, vol. 1, pp. 511-518.

**Claims**

1.  A system for videoconferencing including a camera and a microphone connected to an acquisition block, and comprising a source coding block and a channel coding block connected to a terminal of a transmission line, **characterized in that** the system further comprises an add-on system inserted at a point between said acquisition block (12) and said source coding block (13) in order to obtain an automatic speaker detection and tracking system which directs the camera towards the speaker at a videoconference.

2.  System in accordance with claim 1, **characterized in that** the system comprises motion detection means (19, 20) to detect the hand motion or hand rising of a potential speaker, and to subsequently locate his/her face.

3.  System in accordance with claim 1 or 2, **characterized in that** the system further comprises face localization means (21, 20) to locate the face and/or the head and shoulder position of a person.

4.  System in accordance with claim 2 or 3, **characterized in that** said means are implemented by pure software and run real-time, hardware or a combination of both.

5.  System in accordance with one of the claims 1 to 4, **characterized in that** the system further comprises means which schedule automatically a subsequent potential speaker while allowing, on demand, interactive scheduling by a given person.

6. System in accordance with one of the claims 1 to 5, **characterized in that** the system comprises two cameras (16, 17) as input devices, wherein one camera (16) is fixed and shows continuously all the participants to the conference in one room and the second camera (17) is mobile, and further comprising a motion detection and analysis block (19) to detect a first rising hand of a potential speaker.

7. System in accordance with one of the claims 1 to 6, **characterized in that** the system comprises a mobile camera command (20).and a block (21) to detect and locate the face of a speaker and to zoom the mobile camera (17) towards a speaker until the "head and shoulder" position is reached.

8. System in accordance with claim 7, **characterized in that** the mobile camera is arranged to keep said position as long as the person in the image is recognized as speaking, wherein preferably this is done by detection of the lips motion along with sufficient audio energy, wherein meanwhile the fixed camera is scheduling speakers which raise their hand for once the current speaker has finished talking, so that if the currently framed person is recognized as not speaking anymore the system returns the command to the fixed camera and the system then frames the next scheduled person having requested to speak, or displays the global view of the scene if nobody has requested to speak on this site.

9. System in accordance with one of the claims 1 to 8, comprising means to detect the mouth of a speaker as a small rectangle ($M_H$ x $M_L$) using a general face model, wherein the motion of the video signal seen through this rectangle window is monitored as frame difference energy, and wherein in parallel, the energy of an audio signal is computed in a sliding window of length $T_1$, and wherein the video is switched to a camera or to a next speaker when both energies remain more than $T_2$ seconds below fixed thresholds to serve the next speaker.

10. System in accordance with one of the claims 1 to 9, comprising means to activate the skin colour of a speaker to re-enforce the hand rising detection.

Fig. 1

Fig. 2

Fig. 3

**European Patent Office**

# EUROPEAN SEARCH REPORT

Application Number

EP 05 40 5419

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2002/101505 A1 (GUTTA SRINIVAS ET AL) 1 August 2002 (2002-08-01) | 1-7 | H04N7/15 H04N7/18 |
| Y | | 8-10 | |
| | * abstract; figure 1 * | | |
| | * paragraph [0006] * | | |
| | * paragraph [0018] * | | |
| | * paragraphs [0024] - [0026] * | | |
| | * paragraphs [0029], [0030] * | | |
| | * paragraphs [0037], [0038] * | | |
| | * paragraph [0056] * | | |
| | * paragraph [0058] * | | |
| | ----- | | |
| Y | US 6 850 265 B1 (STRUBBE HUGO J ET AL) 1 February 2005 (2005-02-01) | 8-10 | |
| | * abstract * | | |
| | * column 2, lines 45-59 * | | |
| | * column 7, lines 5-32 * | | |
| | * column 7, lines 56-59 * | | |
| | ----- | | |

TECHNICAL FIELDS SEARCHED (Int.Cl.7)

H04N
G01S

The present search report has been drawn up for all claims

| Place of search | Date of completion of the search | Examiner |
|---|---|---|
| Munich | 2 September 2005 | Lindgren, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 40 5419

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2005

| Patent document cited in search report | Publication date | Patent family member(s) | Publication date |
|---|---|---|---|
| US 2002101505 A1 | 01-08-2002 | CN 1422494 A<br>WO 0247386 A1<br>EP 1260099 A1<br>JP 2004515982 T | 04-06-2003<br>13-06-2002<br>27-11-2002<br>27-05-2004 |
| US 6850265 B1 | 01-02-2005 | WO 0182626 A1<br>EP 1277342 A1<br>JP 2003532348 T | 01-11-2001<br>22-01-2003<br>28-10-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FULVIO MOSCHETTI ; MURAT KUNT ; ERIC DEBES.** A Statistical Adaptive Block-Matching Motion Estimation. *IEEE Trans. on Circuits and Systems for Video Technology,* April 2003, vol. 13 (4), 417-431
- **R. LILLESTRAND.** Techniques for change detection. *IEEE Trans. Comput.,* July 1972, vol. 21 (7), 654-659
- **M. S. ULSTAD.** An algorithm for estimating small scale differences between two digital images. *Pattern Recognit.,* 1973, vol. 5, 323-333
- **K. SKIFSTAD ; R. JAIN.** Illumination independent change detection for real world image sequences. *Comput. Vis. Graph. Image Process.,* 1989, vol. 46 (3), 387-399
- **L. G. BROWN.** A survey of image registration techniques. *ACM Comput. Surv.,* 1992, vol. 24 (4
- **R. J. RADKE ; S. ANDRA ; O. AL-KOFAHI ; B. ROYSAM.** Image change detection algorithms: A systematic survey. *IEEE Transactions on Image Processing,* March 2005, vol. 14 (3), 294-307
- **R.L. HSU ; M. ABDEL-MOTTALEB ; A.K. JAIN.** Face detection in Color Images. *IEEE Trans. on Pattern Analysis and Machine Intelligence,* May 2002, vol. 24 (5), 696-706
- **E. SABER ; A. M. TEKALP.** Frontal-View Face Detection and Facial Feature Extraction Using Color, Shape and Symmetry Based Cost Functions. *Pattern Recognition Letters,* 1998, vol. 19, 669-680
- **M.-H. YANG ; N. AHUJA.** Detecting Human Faces in Color Images. *Proc. IEEE Int'l Conf. Imaging Processing,* October 1998, 127-139
- **F. CROW.** Summed-area tables for texture mapping. *Proceedings of SIGGRAPH,* 1984, vol. 18 (3), 207-212
- **P. VIOLA ; M. JONES.** Rapid object detection using a boosted cascade of simple features. *Proc. of IEEE Conf. on Computer Vision and Pattern Recognition,* 2001, vol. 1, 511-518